Europäisches Patentamt

(19) European Patent Office

Office européen des brevets

(11) Publication number: **0 199 717**
**B1**

(12) **EUROPEAN PATENT SPECIFICATION**

(45) Date of publication of patent specification: **23.08.89**

(51) Int. Cl.⁴: $G\ 01\ N\ 17/00$, $G\ 01\ N\ 27/46$

(21) Application number: **84904002.7**

(22) Date of filing: **02.11.84**

(86) International application number:
**PCT/NO84/00048**

(87) International publication number:
**WO 86/02728 09.05.86 Gazette 86/10**

(54) **ELECTRODE SYSTEM FOR THE MEASUREMENT OF CORROSION RATE.**

(43) Date of publication of application:
**05.11.86 Bulletin 86/45**

(45) Publication of the grant of the patent:
**23.08.89 Bulletin 89/34**

(84) Designated Contracting States:
**AT BE CH DE FR GB LI LU NL SE**

(56) References cited:
**EP-A-0 039 750**
**EP-A-0 052 388**
**EP-A-0 100 814**
**DE-A-2 711 529**
**GB-A-1 150 416**
**GB-A-2 006 437**
**SE-B- 335 435**

(73) Proprietor: **INSTITUTT FOR ENERGITEKNIKK**
**P.O. Box 40**
**N-2007 Kjeller (NO)**

(72) Inventor: **VIDEM, Ketil**
**Blaveisstien 7**
**N-2007 Kjeller (NO)**

(74) Representative: **Topps, Ronald et al**
**D. YOUNG & CO 10 Staple Inn**
**London WC1V 7RD (GB)**

Courier Press, Leamington Spa, England.

## Description

The present invention relates to an electrode system for the measurement of the corrosion rate of a metal in an aqueous medium.

Many different methods have been developed for the measurement of corrosion rate, e.g. as disclosed in a paper presented at BSE/NACE "Middle East Corrosion Conference", and having the title "The Importance of Corrosion Monitoring in Oilfield Systems". Here it is also indicated that the corrosion rate of a metal submerged in an electrolytically conducting aqueous environment may be determined by applying a weak potential in addition to the free corrosion potential between mutually separated electrodes in the said environment, upon which the current and voltage between the electrodes are measured and the corresponding equivalent linear polarization resistance $R_p$ between the electrodes deduced. The corrosion rate $I_c$ is then determined by means of the formula:

$$I_c = \frac{C}{R_p}$$

The constant C must then be settled by other measurements, and the formula is only valid for small values of the applied current and voltage.

This formula also presupposes that the current between the electrodes is primarily limited by the corrosion reactions on the two electrodes at the applied voltage. If, however, the electrolyte resistance is in itself a substantial part of the resistance $R_p$ included in the above formula, this formula will indicate that the corrosion rate is lower than it actually is. Expectation of a substantially lower corrosion rate than the one actually appearing may in many cases be risky.

Proves for the measurement of such linear polarization resistance are usually very simple, and consist for example of two steel pieces spaced about 1 cm apart. Devices of this type are, however, not well suited for continuous monitoring of corrosion conditions in practice, e.g. in a pipeline. The research on which the present invention is based aimed at the provision of an electrode system particularly suited for such monitoring and that may readily be fitted into existing liquid-carrying structures.

European Patent Specification EP—A— 0,052, 388 discloses an electrode system for measuring the corrosion rate of metal in an aqueous medium, comprising electrodes of the respective metal disposed in spaced relationship (e.g. on the inner surface of rings of electrically insulating material) to be submerged in the aqueous medium to convey electric current through it. The assembly is of a size and configuration so as to be maintained liquid-tight between flanges on pipe sections joined together to form a pipeline for the through-flow of the aqueous medium.

European Patent Specification EP—A— 0,039, 750 discloses inter alia corrosion-monitoring apparatus comprising an inner ring of insulating material bearing electrodes, and an outer annular flange (1) of high-strength material mounted around and rigidly secured to the inner ring.

The present invention provides an electrode system for the measurement of the corrosion rate of a metal subject to corrosion in an aqueous medium, the electrode system comprising working, reference and counter electrodes of the respective metal to be submerged in operation in the aqueous medium to convey electric current through it, the metal electrodes being disposed on the interior surface of a ring of electrically insulating material and with their active electrode surfaces mutually spaced, an outer annular flange of high strength material being mounted around and rigidly secured to the inner ring of insulating material, and the outer annular flange and the inner ring as well as the metal electrodes being of configuration and dimensions to fit closely and be maintained liquid tight between flanges on pipe sections that are joined together to form a pipeline for the through-flow of the aqueous medium, characterized in that the working electrode is divided into two parts, the reference electrode being located with small clearance between the said parts, the said clearance being substantially smaller than the distance between the working and counter electrodes.

With an embodiment according to the invention a geometric configuration is achieved that, in simple manner and without special measures, allows the electrode system to be located between the flanges of pipe sections interconnected into a pipeline. The active electrode surfaces are here preferably disposed flush with and having the same curvature as the interior surface of the ring of insulating material, the interior diameter of the ring being preferably substantially equal to the interior diameter of the adapted pipe sections.

The two parts into which the working electrode is divided are preferably approximately equal.

Further, current conductors electrically connected to the electrodes are passed through radial holes in the ring of insulating material and the annular flange onto terminals exterior to the electrode systems.

Measuring current is then caused to flow through the working electrode and the counter electrode while the voltage drop between the reference electrode and the working electrode is measured. The ratio of this voltage drop and the measuring current represents the equivalent polarization resistance of the corrosion process generated by the measuring current on the working electrode. As the voltage drop is measured across the small interspace between the working and reference electrodes, the resistance of the electrolyte itself does not contribute significantly to this voltage drop, which therefore is essentially a measure of the voltage difference between freely corroding metal and metal subjected to corrosion with current load.

The corresponding voltage drop may possibly be achieved in similar manner at the other electrode, which then must also be subdivided into a working electrode and a reference electrode, or it may be deduced at the same electrode with opposite current flow direction. The sum of the two voltage drops and the current between the active electrode surfaces are then used to calculate the total polarization resistance $R_p$ which is included in the above formula for the corrosion rate $I_c$.

An illustrative embodiment of the invention will now be explained in more detail with reference to the accompanying drawings, in which

Figure 1 shows a view in axial direction of an embodiment of an electrode system according to the invention, and

Figure 2 shows this electrode system in section along the line O—O in Figure 1 and in an operative position clamped between end flanges of two interconnected pipe sections.

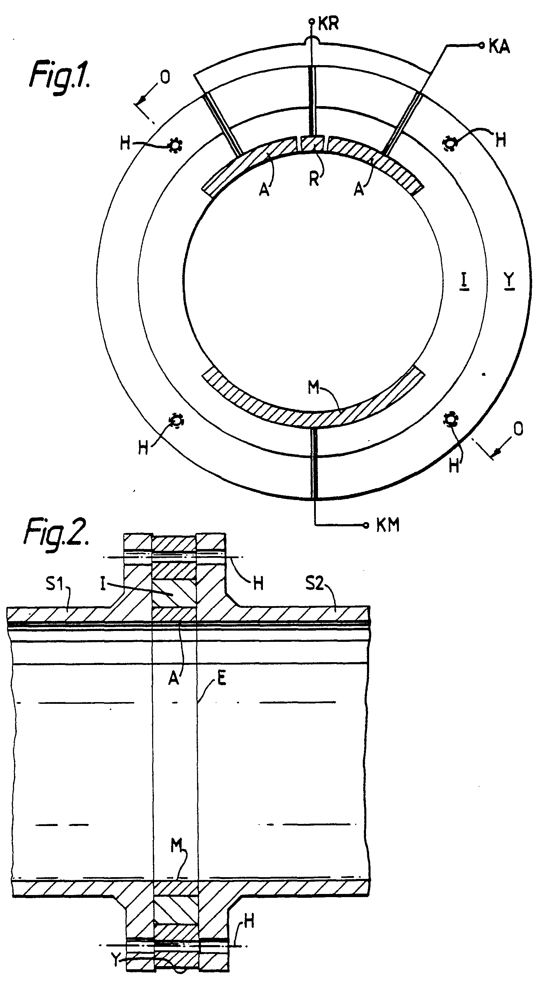

Figure 1 shows an electrode system according to the present invention viewed in the axial direction. This system comprises two electrodes (M) and (A, R, A) mounted directly opposite each other on the interior side of a ring I of insulating material. The electrodes and the insulating ring are supported by an outer annular flange Y of steel, which is placed around the ring I and rigidly secured to it.

One of the electrodes is subdivided into a working electrode A and a reference electrode R, the working electrode being in turn divided into two parts disposed symmetrically with respect to the reference electrode with a small clearance on opposite sides of it. These two parts are interconnected by means of insulated leads, which are passed through narrow radial bores in the inner insulation ring I and the outer steel ring Y. This interconnection is linked to an exterior terminal KA for connection to one pole of a voltage source (not shown). The other pole of the voltage source is then connected to an exterior terminal KM, which by means of an insulated lead through the rings I and Y is linked to counter electrode M.

The reference electrode R is connected to its associated measuring terminal KR through an insulated lead, which in the same manner as the other leads is passed through radial holes in the rings I and Y. These radial holes may be sealed by means of a suitable sealing paste around the leads.

The measuring terminal KR receives no voltage, but is used for measuring the voltage drop between the reference electrode R and the working electrode A when a low-voltage source is connected between the terminals KA and KM to cause a measuring current to flow between the counter electrode M and the working electrode A.

The measured voltage between the reference electrode R and the working electrode A represents, due to the very small distance between these electrodes, essentially the voltage drop across the corrosion process produced by the measuring current on the surface of the working electrode, and, with known values of measuring current and voltage drop the polarization resistance may be determined, and thereby also the corrosion rate, by means of the formula above.

When especially high precision is demanded, a correction may be made to the voltage drop in the electrolyte. This voltage drop follows Ohm's Law and is accordingly proportional to the current, the specific resistance of the electrolyte and a geometric factor (the cell constant). This geometric factor is the same for all electrode systems having the same dimensions and configuration and may be determined e.g. by means of alternating current measurements. Such a correction as to the voltage drop in the electrolyte requires that the specific resistance of the aqueous medium be known. This may be measured separately by means of ordinary known measuring techniques.

The electrode system according to the invention is particularly configured and dimensioned for ready insertion into a pipeline conveying an aqueous solution of corrosive materials.

This is achieved by clamping the electrode system E between the flanges of two adjoining pipe sections S1, S2 of the pipeline, as schematically shown in Figure 2. For this purpose the outer ring Y is provided with bolt-holes H for the insertion of clamping bolts (not shown) between the flanges of the adjoining pipe sections.

The electrodes A, R and M on the inside of the insulation ring I are shown as having the same curvature as the interior surface of the ring and are disposed flush with this surface, which in turn suitably has the same interior diameter as the pipe sections S1 and S2, in order that no additional flow resistance or turbulence-causing protrusion is introduced into the pipeline.

Since the voltage drop in the electrolyte is included to only a small degree in the measured voltage and if necessary may be calculated, the electrode system according to the invention is capable of providing more accurate measurements of the ratio of current and voltage than has hitherto been possible. This allows use of the electrode system for other methods of determining the corrosion rate than the above indicated deduction of linear polarization resistance. Measurements of the ratio of current and voltage with high accuracy allow direct determination of the constant C in the formula above on the basis of prevailing conditions, rather than being dependent on values of uncertain reliability to be found in the literature or from personal experience.

Such a determination of the constant C is particularly important when corrosion inhibitors are used, which may effect a substantial variation of this constant.

The electrode system of the present invention is also well suited for corrosion determination by alternating current measurements and for use with the so-called RC-method, which has been developed by the present Applicants.

## Claims

1. An electrode system for the measurement of the corrosion rate of a metal subject to corrosion in an aqueous medium, the electrode system (E) comprising working, reference and counter electrodes (A, R, M) of the respective metal to be submerged in operation in the aqueous medium to convey electric current through it, the metal electrodes (A, R, M) being disposed on the interior surface of a ring (I) of electrically insulating material and with their active electrode surfaces mutually spaced, an outer annular flange (Y) of high strength material being mounted around and rigidly secured to the inner ring (I) of insulating material, and the outer annular flange and the inner ring as well as the metal electrodes being of configuration and dimensions to fit closely and be maintained liquid tight between flanges on pipe sections (S1, S2) that are joined together to form a pipeline for the through-flow of the aqueous medium, characterized in that the working electrode (A) is divided into two parts, the reference electrode (R) being located with small clearance between the said parts, the said clearance being substantially smaller than the distance between the working and counter electrodes (A, M).

2. A system as claimed in Claim 1 in which the working electrode (A) is divided into two substantially equal parts.

3. A system as claimed in Claim 1 or 2 in which the counter electrode (M) is mounted essentially diametrically opposite the working and reference electrodes (A, R) on the interior surface of the ring (I) of electrically insulating material.

4. A system as claimed in any preceding claim in which the reference electrode (R) has a substantially smaller active surface than the working electrode (A).

5. A system as claimed in any preceding claim in which the clearance between the reference electrode (R) and the working electrode (A) is substantially smaller than the active electrode surface of either of the electrodes.

## Patentansprüche

1. Elektrodensystem zum Messen der Korrosionsrate eines Metallgegenstandes bei Korrosion in einem wässerigen Medium, welches Elektrodensystem (E) Arbeits-, Bezugs- und Gegenelektroden (A, R, M) aus dem entsprechenden Metall aufweist, die im Betrieb in das wässerige Medium zu tauchen sind, um elektrischen Strom hindurchzuleiten, und die an der inneren Oberfläche eines Ringes (I) aus elektrisch isolierendem Material angeordnet sind, wobei ihre aktiven Elektrodenflächen im Abstand voneinander liegen, wobei ein äußerer ringförmiger Flansch (Y) aus einem Material hoher Festigkeit vorgesehen ist, der den inneren Ring (I) aus dem isolierenden Material umgibt und mit diesem fest verbunden ist, und wobei der äußere ringförmige Flansch und der innere Ring sowie die aus Metall bestehenden Elektroden eine Gestalt und Abmessungen haben, daß sie zwischen Flanschen von zur Bildung einer Rohrleitung zum Durchfluß des wässerigen Mediums zusammengeschlossenen Rohrabschnitten (S1, S2) genau und dauerhaft flüssigkeitsdicht passen, dadurch gekennzeichnet, daß die Arbeitselektrode (A) in zwei Teile unterteilt ist, zwischen denen mit kleinem Abstand die Bezugselektrode (R) angeordnet ist, wobei dieser Abstand wesentlich kleiner ist als der Abstand zwischen Arbeits- und Gegenelektrode (A, M).

2. System nach Anspruch 1, bei welchem die Arbeitselektrode (A) in zwei im wesentlichen gleiche Teile geteilt ist.

3. System nach Anspruch 1 oder 2, bei welchem die Gegenelektrode (M) im wesentlichen diametral gegenüber den Arbeits- und Bezugselektroden (A, R) an der inneren Oberfläche des Ringes (I) aus elektrisch isolierendem Material angeordnet ist.

4. System nach einem der vorangehenden Ansprüche, bei welchem die Bezugselektrode (R) eine wesentlich kleinere aktive Fläche hat als die Arbeitselektrode (A).

5. System nach einem der vorangehenden Ansprüche, bei welchem der Abstand zwischen der Bezugselektrode (R) und der Arbeitselektrode (A) wesentlich kleiner ist als die aktive Elektrodenfläche jeder der Elektroden.

## Revendications

1. Système d'électrodes pour la mesure du taux de corrosion d'un métal sujet à la corrosion dans un milieu aqueux, le système d'électrodes (E) comprenant des électrodes de travail, de référence et une contre-électrode (A, R, M) en métal correspondant devant être immergées en service dans le milieu aqueux pour transporter un courant électrique à travers celui-ci, les électrodes métalliques (A, R M) étant disposées sur la surface intérieure d'un anneau (I) d'un matériau électriquement isolant et leurs surfaces actives d'électrodes étant séparées les unes des autres, une bride annulaire externe (Y) d'un matériau à haute résistance étant montée autour et fixée de manière rigide sur l'anneau interne (I) d'un matériau isolant, et la bride annulaire externe et l'anneau interne, de même que les électrodes métalliques, étant de configuration et de dimensions leur permettant de s'adapter étroitement et d'être maintenus de façon étanche au liquide entre les brides sur les tronçons de tuyau (S1, S2) qui sont reliés entre eux pour former un pipe-line destiné à l'écoulement du milieu aqueux, caractérisé en ce que l'électrode de travail (A) est divisée en deux parties, l'électrode de référence (R) étant placée avec un faible intervalle entre lesdites parties, ledit intervalle étant nettement inférieur à la distance entre l'électrode de travail et la contre-électrode (A, M).

2. Système selon la revendication 1 dans lequel l'électrode de travail (A) est divisée en deux parties sensiblement égales.

3. Système selon les revendications 1 ou 2 dans lequel la contre-électrode (M) est essentiellement montée de manière diamétriquement opposée aux électrodes de travail et de référence (A, R) sur la surface intérieure de l'anneau (I) en matériau électriquement isolant.

4. Système selon l'une quelconque des revendications précédentes dans lequel l'électrode de référence (R) comporte une surface active nettement inférieure à l'électrode de travail (A).

5. Système selon l'une quelconque des revendications précédentes dans lequel l'intervalle entre l'électrode de référence (R) et l'électrode de travail (A) est nettement inférieur à la surface active d'électrode de l'une quelconque des électrodes.

Fig.1.

Fig.2.